# EUROPEAN PATENT APPLICATION

(11) **EP 1 933 219 A2**
(43) Date of publication of application: **18.06.2008**
(21) Application number: 07380358.7
(22) Date of filing: 14.12.2007
(51) Int. Cl.: G05D 16/06

(54) **Pressure regulator**

(30) Priority: 15.12.2006 ES 200603195
(71) Applicant: Gala-Sol, S.A., 50015 Zaragoza (ES)
(72) Inventor: Casas Fanlo, Felix Angel, 50015 Zaragoza (ES); Gómez, Raúl, 50015 Zaragoza (ES); Fuentelsalz Gallego, Jesús, 50015 Zaragoza (ES)
(74) Representative: Ungria Lopez, Javier

(57) **Abstract**

Pressure regulator, of the type consisting of a base body and a cover body which present a high pressure chamber and a low pressure chamber with their corresponding pressure gauge, which, by means of actuating the regulating hand-wheel, permit the outlet pressure of the fluid to be regulated, defined in that
- in the space relative to the low pressure chamber (5) a safety double-wall (9-10) is provided;
- the membrane/plate (11) for controlling the passage of the gas is materialised by a unitary assembly;
- the base body (2) of the regulator (1), in the radial position, presents a hollow arm (14);
- the rod (17) for the gas inlet ends in a threaded section (18) and a more internal section (19) of larger internal diameter and smooth surface; and
- the base body (2) of the regulator (1) presents a safety valve (21) with visual and acoustic alarm.

## Description

### OBJECT OF THE INVENTION

As stated in the title of this descriptive specification, the following invention relates to a pressure regulator, being of the type of pressure regulator that presents a high pressure chamber and a low pressure chamber with their corresponding pressure gauge, which, by means of actuating the regulating hand-wheel, permits the outlet pressure of the fluid to be regulated, such that a first objective of the invention is to provide the body of the regulator, in the low pressure chamber, with a safety double-wall.

A second objective of the invention is that the rubber membrane and the plate made of plastic material for acting on the control mechanism for the passage of the fluid from the high pressure chamber to the low pressure chamber should form a unitary assembly, for which the rubber membrane is injected on the plastic plate.

A third objective of the invention is to provide the regulator body with an arm for attachment to the inlet rod for the fluid, reinforcing the attachment between them.

A fourth objective of the invention is to provide the regulator with a quick-fitting safety valve which can be clipped on and which, in the event of a leak of fluid, will act as a visual and acoustic sensor.

### FIELD OF APPLICATION

This specification describes a pressure regulator having wide-ranging application since it can have industrial use (welding equipment, gas pipelines, etc.), medicinal use (oxygen supply for patients, gas lines in hospitals, etc.), food use (inert gas for the conservation of food packaged in such atmospheres, fermentation of wine with nitrogen etc.), as well as other applications.

### PRIOR ART OF THE INVENTION

As is known, pressure regulators have wide-ranging application for the regulation of the pressure of combustible or inert gases, whose regulators incorporate a first pressure gauge for controlling the inlet pressure of the gas to the regulator and a second pressure gauge for controlling the outlet pressure of the gas.

Moreover, the pressure regulator has a cover body which is fixed to the base body by screwing and incorporates different functioning components, in such a way that the high pressure chamber is kept separate from the low pressure chamber by means of a mechanism for controlling the pressure of the gas from the high pressure chamber to the low pressure one, this control mechanism comprising a sealing piece tensioned by a spring, along with a needle on which the membrane/plate assembly acts when the passage control cover is actuated due to the membrane/plate assembly being tensioned by a pressure spring that can be adjusted by turning the regulating hand-wheel fitted to the cover body.

Conventionally, the membrane/plate assembly comprises a rubber membrane body and a metallic plate body joined by a screw and the corresponding nut, in other words, it is made up of four pieces with an assembly process by means of the screw and the fastening nut, with the consequent economic cost that this entails.

The gas inlet into the regulator is materialised via a rod which is attached to the body of the regulator by being threaded in proximity to it. This execution presents the drawback that if the gas bottle falls, which can easily happen, the rod breaks in relation to one of the threading notches.

Pressure regulators also incorporate a simple safety valve for gas escape, by means of which the gas can be released is case of need, due to any circumstance, though this valve does not act as a sensor for the leak produced, and so, when the bottle becomes empty, in certain cases it is not known for sure whether this is because the gas has been used up or because there has been a leak.

### DESCRIPTION OF THE INVENTION

The present specification describes a pressure regulator, being of the type consisting of a base body and a cover body which present a high pressure chamber and a low pressure chamber with their corresponding pressure gauge, which, by means of actuating the regulating hand-wheel, permits the outlet pressure of the fluid to be regulated, in such a way that the pressure regulator is defined in that:
- in the space relative to the low pressure chamber of the base body of the regulator a safety double-wall is materialised, in such a way the cover body covers the external lateral surface of the inner wall;
- the membrane/plate for controlling the passage of the gas from the high pressure chamber to the low pressure chamber is materialised by a unitary assembly by injecting the rubber membrane body on the plate body made of plastic material;
- the base body of the regulator, in the radial position, presents a hollow arm which internally ends in a threaded section and a furthermost end section of slightly larger diameter and smooth surface;
- the rod for the gas inlet ends via its end for attachment to the regulator in a threaded section and a more internal section of slightly larger internal diameter and smooth surface; and
- the base body of the regulator presents a safety valve with visual and acoustic alarm for being fitted by means of clipping and consisting of a first body with sealed closure tensioned by a spring and a second body, more external, backed onto the first body.

So, the external lateral surface of the internal wall relative to the safety double-wall materialised in the low pressure chamber of the base body of the regulator is covered by the cover body and acts as an opening for the cover body and which, in case of overpressure, prevents its deformation and even the expulsion of the cover body.

Moreover, the unitary assembly, slightly flexible, for controlling the passage of gas from the high pressure chamber to the low pressure chamber of the regulator, is seated on the upper base, in the form of a circular crown, with its internal wall relative to the safety double-wall materialised in the low pressure chamber of the base body of the regulator.

In the assembly of the inlet rod for the gas to the high pressure chamber of the regulator, its threaded end section is attached to the internal threaded section of the hollow radial arm of the base body of the regulator, while its contiguous section with a smooth external surface is backed onto the furthermost end section with a smooth surface.

So, the attachment between the rod and the body of the regulator is reinforced, since the notch effect is eliminated with the opening of the rod inside the hollow arm of the base body of the regulator, and whose arm is likewise reinforced by means of some external radial ribs.

Moreover, in case of a gas leak via the safety valve, the second and outer body is displaced from its rest position towards the outside by displacement of the first body caused by the exit of the gas, and it remains in that position acting as a visual sensor. In this way, the second visual sensor body can have a different colour, such as red, and it will not return to its position until pushed by an operator, thereby guaranteeing that the leak has been noticed. Moreover, the visual sensor can be accompanied by an acoustic alarm.

In order to complement the description that is going to be made forthwith, and with the aim of facilitating a better understanding of the characteristics of this invention, this specification is accompanied by a set of plans containing figures in which, on an illustrative rather than limiting basis, the most characteristic details of the invention have been represented.

### BRIEF DESCRIPTION OF THE DESIGNS

Figure 1.- Shows a perspective view of a pressure regulator, in which can be seen the pressure gauges for controlling the pressure in the high pressure and low pressure chambers, and the safety valve warning.
Figure 2.- Shows a perspective view of the base body of the pressure regulator reinforced with ribs, in which can be seen the double-wall defined between the low pressure chamber and the outside.

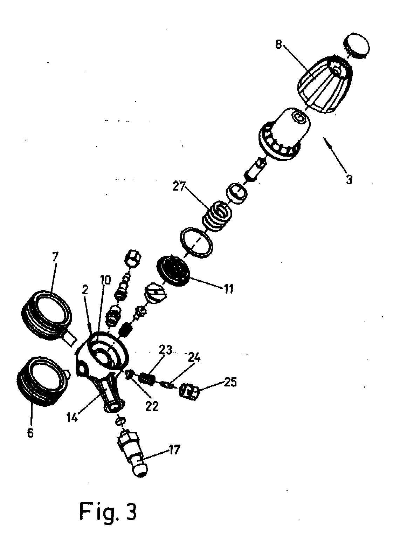

Figure 3.- Shows an exploded perspective view of the pressure regulator of the previous figure.

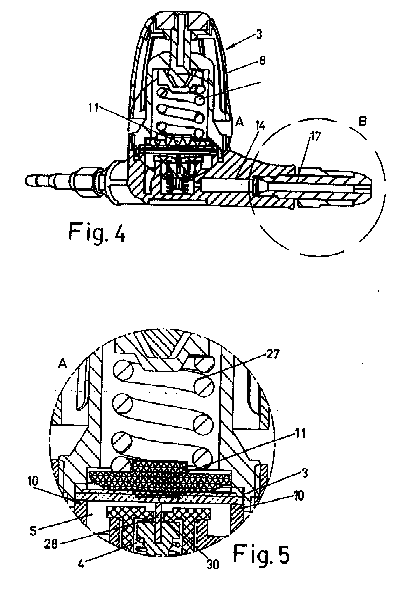

Figure 4.- Shows a view in cross-section, according to a plane vertical to the regulator and diametrically to the attachment arm of the inlet rod for the gas.
Figure 5.- Shows a view in cross-section of detail A of the above figure relative to the mechanism for controlling the passage of gas from the high pressure chamber to the low pressure one, in which can be seen the unitary assembly of membrane/plate tensioned by a spring.

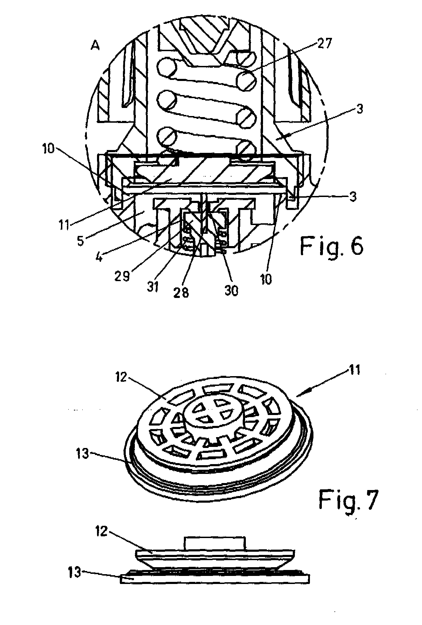

Figure 6.- Shows a view in cross-section of detail A of the above figure relative to the opening of the cover body with the internal wall of the base body, in which can likewise be seen the mechanism for controlling the passage of gas from the high pressure chamber to the low pressure one.
Figure 7.- Shows a perspective view in elevation of the unitary assembly of membrane/plate.
Figure 8.- Shows a view in cross-section in detail of the attachment of the inlet rod for gas into the regulator.
Figure 9.- Shows a view in detail of the safety valve.

### DESCRIPTION OF THE PREFERRED FORM OF EMBODIMENT

With the figures in view and in accordance with the adopted numbering, we can see how, starting from a pressure regulator 1 of the conventional type consisting of a base body 2 and a cover body 3, which present a high pressure chamber 4 and a low pressure chamber 5 with their corresponding pressure gauge 6 and 7, which, by means of actuating the regulation hand-wheel 8, permits the outlet pressure of the fluid to be regulated, a series of improvements have been introduced.

So, in the space relative to the low pressure chamber 5 of the base body 2 of the regulator 1 a safety double-wall is materialised, with the two walls withstanding the working pressure.

In this way, in addition to a first external wall 9, a second internal wall 10 has been defined in the form of a circular crown, in such a way that when the cover body 3 is screwed into the base body, the cover body leaves an opening on the external face of the second internal wall 10, thus preventing possible deformations and even its expulsion in the event of possible overpressures.

Moreover, the unitary assembly of membrane/plate 11 for controlling the passage of the gas from the high pressure chamber 4 to the low pressure chamber 5 is materialised by injecting the rubber membrane body 13 on the plate body 12 made of plastic, permitting a reduction to be achieved in labour and therefore an economic saving.

Equally, the base body 2 of the regulator, in the radial position, presents a hollow arm 14 which internally ends in a threaded section 15 and a furthermost end section 16 of slightly larger diameter and smooth surface.

Moreover, the rod 17 for the gas inlet ends via its end for attachment to the regulator 1 in a threaded section 18 and a more internal section 19 of slightly larger internal diameter and smooth surface.

In this way, in the assembly of the inlet rod 17 for the gas to the regulator 1 its threaded section 18 is fixed by threading onto the threaded section 15 of the arm 14 and its smooth and larger diameter section 19 is backed onto the smooth section 16 of the arm, in such way that as the hollow arm 14 has some external radial ribs 20, its rigidity is increased.

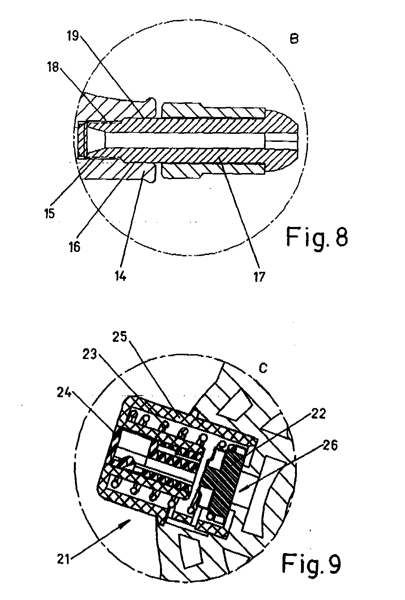

Likewise, the base body 2 of the regulator presents a safety valve 21 with visual and acoustic alarm for being fitted by means of being clipped on, this safety valve consisting of a first body 22 with sealed closure tensioned by a spring 23 and a second body 24, more external, backed onto the first body 22, said bodies being mounted in a casing 25 which is secured by being clipped on, as shown in figure 9.

So, in case of a gas leak from the high pressure chamber 4, the first body 22 with sealed closure of the outlet hole 26 constituting the safety valve 21 has had to be displaced by overcoming the pressure exerted by the spring 23 by which it is tensioned and said displacement of the first body 22 has necessarily caused the displacement of the second body 24 which, being free, does not return to its original position and acts as a warning element of the leak that has taken place, while the first body 22 for closure will return to its original position of sealed closure by the action of the spring 23.

In this way, the second body 24, which can have a different colour, such as red, acts as a visual warning element, being able to be accompanied by an acoustic alarm.

In accordance to what has been stated and in the way that a pressure regulator functions, when the gas enters the high pressure chamber 4 the control of the passage of the gas take place to the low pressure chamber 5, in such a way that the unitary assembly of membrane/plate 11 is tensioned by the spring 27 and, by acting on the regulating hand-wheel 8 of the cover body 3, it flexes slightly causing the needle 28 to displace the closure body 29 with the gas circulating through the passage hole 30.

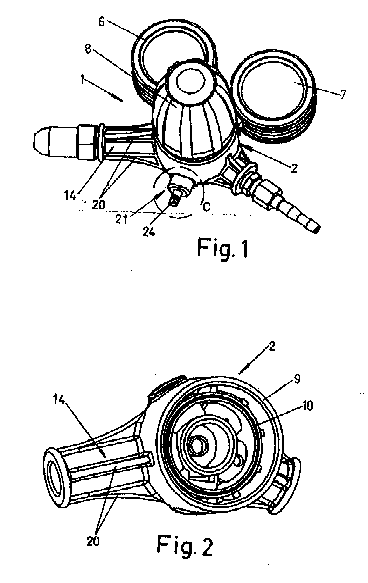

When the gas ceases to exit from the spring 23 it causes the first body 22 to return to its rest position blocking the hole 26, while the second body 24 remains immobile projecting towards the outside, as shown in figure 1 of the designs.

## Claims

1. **PRESSURE REGULATOR,** being of the type consisting of a base body and a cover body which present a high pressure chamber and a low pressure chamber with their corresponding pressure gauge, which, by means of actuating the regulating hand-wheel, permits the outlet pressure of the fluid to be regulated, **characterised in that** the pressure regulator (1) is defined **in that**:
- in the space relative to the low pressure chamber (5) of the base body (2) of the regulator (1) a safety double-wall (9-10) is materialised;
- the membrane/plate (11) for controlling the passage of the gas from the high pressure chamber (4) to the low pressure chamber (5) is materialised by a unitary assembly by injecting the rubber membrane body (13) on the plate body (12) made of plastic material;
- the base body (2) of the regulator (1), in the radial position, presents a hollow arm (14) which internally ends in a threaded section (15) and a furthermost end section (16) of slightly larger diameter and smooth surface;
- the rod (17) for the gas inlet ends via its end for attachment to the regulator (1) in a threaded section (18) and a more internal section (19) of slightly larger internal diameter and smooth surface; and
- the base body (2) of the regulator (1) presents a safety valve (21) with visual and acoustic alarm consisting of a casing 26 for being fitted by being clipped on which houses a first body (22) with sealed closure tensioned by a spring (23) and a second body (24), more external, backed onto the first body (22).

2. PRESSURE REGULATOR, according to claim 1, **characterised in that** the external lateral surface of the internal wall (10) relative to the safety double-wall (9-10), materialised in the low pressure chamber (5) of the base body (2) of the regulator (1), is covered by the cover body (3).

3. PRESSURE REGULATOR, according to claim 1, **characterised in that** the unitary assembly of membrane/plate (11), for controlling the passage of gas from the high pressure chamber (4) to the low pressure chamber (5) of the regulator (1), is seated on the upper base, in the form of a circular crown, with its internal wall (10) relative to the safety double-wall materialised in the low pressure chamber (5) of the base body (2) of the regulator (1).

4. PRESSURE REGULATOR, according to claim 1, **characterised in that** in the assembly of the inlet rod (17) for the gas to the high pressure chamber (4) of the regulator (1), its threaded end section (18) is attached to the internal threaded section (15) of the hollow radial arm (14) of the base body (2) of the regulator (1), while its contiguous section (19) with a smooth external surface is backed onto the furthermost end section (16) with a smooth surface.

5. PRESSURE REGULATOR, according to claim 1, **characterised in that** in case of a gas leak via the safety valve (21), the second and outer body (24) is displaced from its rest position towards the outside by displacement of the first body (22) caused by the exit of the gas, remaining **in that** position and acting as a visual sensor.
